# DEMANDE DE BREVET EUROPEEN

(11) **EP 1 527 985 A1**
(43) Date de publication de la demande: **04.05.2005**
(21) Numéro de dépôt: 04292250.0
(22) Date de dépôt: 20.09.2004
(51) Int. Cl.: B62D 65/00

(54) **Structure de présentation d'au moins un élément d'une maquette de représentation d'un véhicule automobile**

(30) Priorité: 22.10.2003 FR 0312357
(71) Demandeur: Peugeot Citroen Automobiles S.A., 78140 Vélizy Villacoublay (FR)
(72) Inventeur: Martin, Stéphane, 93300 Aubervilliers (FR)
(74) Mandataire: Lanceplaine, Jean-Claude

(57) **Abrégé**

L'invention concerne une structure (1) de présentation d'au moins un élément d'une maquette représentant les formes extérieures d'un véhicule automobile, caractérisée en ce qu'elle comprend un premier moyen de support (10) formé par un châssis (11) comportant des poutres longitudinales et transversales assemblées entre elles et munies de moyens (20, 30) de roulage et un second moyen de support (40) formé par un jeu de barres (41) supportées par ledit châssis et adaptables par des moyens d'indexage les unes avec les autres pour former un ensemble modulable de barres (41) horizontales et verticales et de dimensions proches de la maquette.

## Description

La présente invention concerne une structure de présentation d'au moins un élément d'une maquette de représentation des formes extérieures d'un véhicule automobile.

Au cours de la conception d'un nouveau véhicule automobile, les constructeurs de véhicules doivent visualiser et valider les différents éléments composant la carrosserie. Ils doivent également valider toutes les composantes techniques, comme exemple les volumes, les contours de pièces, les jeux et les affleurements entre différentes pièces. Ces pièces sont par exemple des éléments de carrosserie, des vitres, des optiques, des pare-chocs, des poignées de porte et, d'une manière générale, tout élément sensiblement en contact avec l'environnement extérieur du véhicule.

A cet effet, les constructeurs automobiles utilisent couramment deux types de maquettes qui permettent un visualisation des formes extérieures d'un véhicule.

La première est une maquette pleine qui est une représentation physique d'un style extérieur sur un support monobloc de sorte à fournir un moyen de jugement du volume et, dans une faible mesure, des jeux et des affleurements entre les différents éléments.

La seconde est une maquette de type à blocs rapportés qui est une représentation partielle d'un véhicule, comme par exemple la zone avant, arrière ou latérale de sorte à fournir un moyen de jugement des bords techniques, des jeux et des affleurements.

L'invention a pour but de proposer une structure de présentation d'au moins un élément d'une maquette représentative des formes extérieures du véhicule et qui est modulable en fonction des dimensions et des formes du ou des éléments à visualiser.

L'invention a donc pour objet une structure de présentation d'au moins un élément d'une maquette représentant les formes extérieures d'un véhicule automobile, caractérisé en ce qu'elle comprend :
- un premier moyen de support formé par un châssis comportant des poutres longitudinales et transversales assemblées entre elles et munies de moyens de roulage, et
- un second moyen de support formé par un jeu de barres supportées par ledit châssis et adaptables par des moyens d'indexage les unes avec les autres pour former un ensemble modulable de barres longitudinales et verticales et de dimensions proches de la maquette, ledit ensemble étant destiné à supporter au moins ledit élément de cette maquette.

Selon d'autres caractéristiques de l'invention :
- les moyens de roulage comprennent un essieu avant et un essieu arrière munis chacun à chaque extrémité d'un moyeu porte-roue, l'empattement entre les essieux, la distance entre les deux roues d'un même essieu, les angles de carrossage de chaque roue et la hauteur du châssis étant réglables,
- l'ensemble modulable de barres comporte un cadre de base formé de barres longitudinales, transversales et verticales et en appui sur ce châssis, cet ensemble étant relié au châssis par une liaison de type coulissante formant un repère de positionnement selon un axe transversal et un axe vertical pour ledit ensemble modulable de barres,
- la liaison de type coulissante comprend au moins un profilé en forme de U porté par une poutre longitudinale du châssis et destiné à recevoir libre à coulissement une barre longitudinale du cadre de base de l'ensemble modulable de barres,
- le châssis comporte des patins horizontaux formant des repères de positionnement selon un axe vertical et des patins verticaux formant des repères de positionnement selon un axe longitudinal pour l'ensemble modulable de barres,
- les barres sont creuses et ont une section transversale carrée,
- les moyens d'indexage des barres sont formés par au moins une rangée d'orifices ménagés sur chaque face desdites barres et destinés à coopérer avec des pions de positionnement disposés dans les orifices pour relier deux barres entre elles,
- chaque élément de la maquette comporte des patins munis chacun d'un pion de centrage destiné à coopérer avec un orifice d'une barre, les dits patins formant des repères de positionnement dudit élément selon un axe longitudinal, un axe transversal et un axe vertical.

L'invention sera mieux comprise à la lecture de la description qui va suivre, donnée à titre d'exemple et faite en se référant aux dessins annexés, sur lesquels :
- la Fig. 1 est une vue schématique en perspective d'une structure de présentation d'au moins un élément d'une maquette, conforme à l'invention,
- la Fig. 2 est une vue en perspective de la structure de présentation conforme à l'invention,
- la Fig. 3 est une vue en perspective du châssis de la structure conforme à l'invention,
- la Fig. 4 est une vue en perspective du châssis et d'une partie de l'ensemble modulable de barres de la structure conforme à l'invention,
- la Fig. 5 est une vue schématique en perspective et à plus grande échelle de plusieurs barres de l'ensemble modulable de barres de la structure conforme à l'invention,

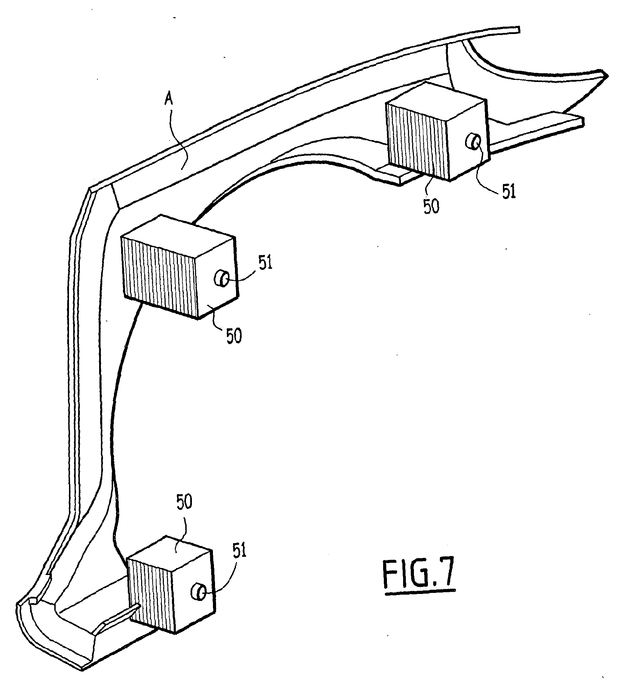

- les Figs. 6 et 7 sont deux vues en perspective respectivement de face et de l'arrière d'une aile d'une maquette de véhicule automobile.

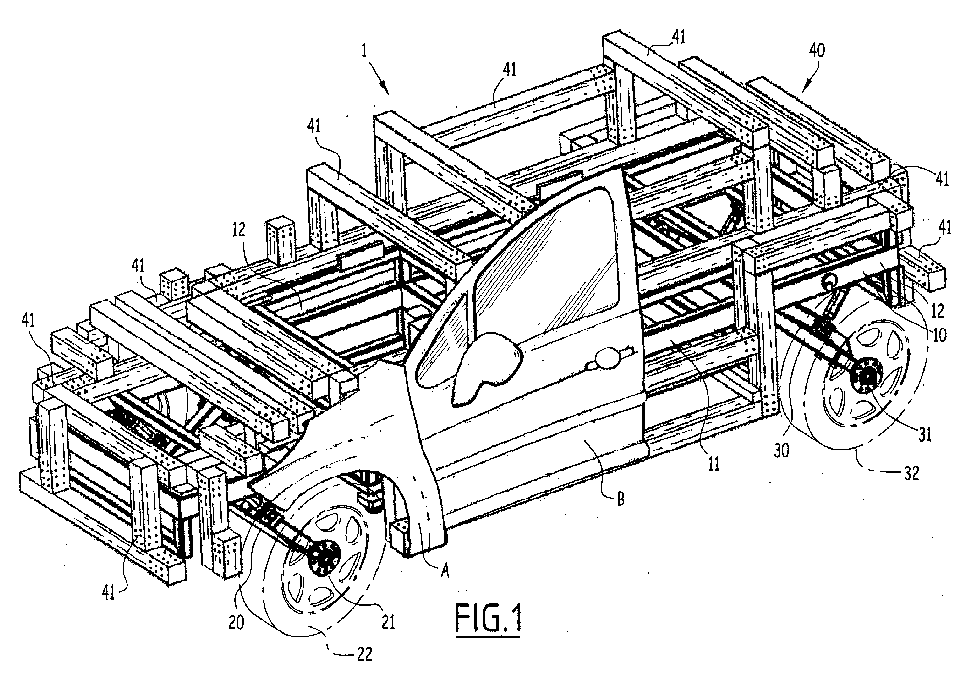

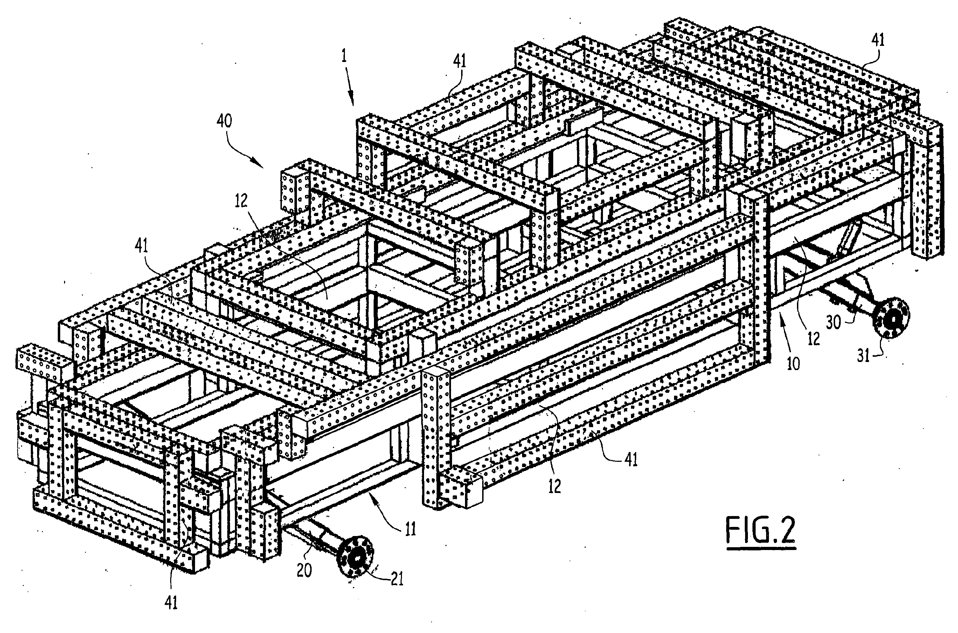

Sur les Figs. 1 et 2, on a représenté schématiquement une structure désignée par la référence générale 1 et qui est destinée à la présentation d'éléments d'une maquette pour la visualisation des formes extérieurs d'un véhicule automobile. Ces éléments sont par exemple des éléments de carrosserie, comme par exemple aile avant A et une portière avant B qui sont disposées sur la structure 1, comme représenté à la Fig. 1.

D'une manière générale, ces éléments placés sur la structure 1 peuvent être constitués par tout élément en contact avec l'environnement extérieur du véhicule.

Ainsi, la structure de présentation 1 constitue un support physique pour la visualisation et la validation des composantes techniques, comme par exemple les volumes, les contours de pièces, les jeux et les affleurements entre ces pièces.

Ainsi que représenté sur les Figs. 1 et 2, la structure de présentation 1 se compose de deux sous-ensembles formés par un premier moyen de support désigné par la référence générale 10 et un second moyen de support désigné par la référence générale 40 porté par le premier moyen de support 10 et qui est destiné à porter les éléments A et B de la maquette.

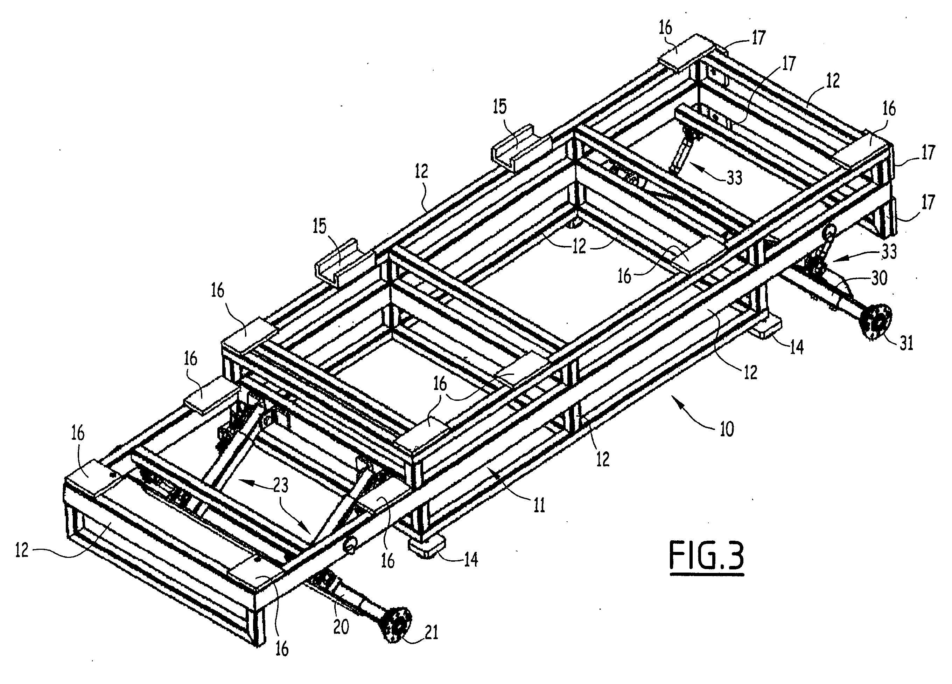

Le premier moyen de support 10 représenté plus en détail à la Fig. 3 est formé par un châssis 11 comportant des poutres 12 longitudinales et transversales et qui sont assemblées entre elles par exemple par soudage pour former un châssis rigide et de dimensions fixes.

Le châssis 11 est muni de moyens de roulage comprenant un essieu avant 20 et un essieu arrière 30. De manière classique, l'essieu avant 20 est muni à chaque extrémité d'un moyeu 21 pour la fixation d'une roue 22 et l'essieu arrière 30 est muni à chacune de ses extrémités d'un moyeu 31 pour la fixation d'une roue 32.

L'essieu avant 20 est relié au châssis 11 par un système 23 de bras articulés et de vérins et l'essieu arrière 30 est aussi relié au châssis 11 par un système 33 de bras articulés et de vérins de façon à pouvoir régler l'empattement entre les essieux 20 et 30 et ainsi que la hauteur du châssis 11.

De plus, la distance entre les roues 22 de l'essieu avant 20 et entre les roues 32 de l'essieu arrière 30 est réglable et les angles de carrossage de chaque roue 22 et 32 est également réglable par des dispositifs appropriés de type connu.

Enfin, le châssis 11 comporte, à sa partie inférieure, des sphères de positionnement 14. Ces sphères 14 sont destinées à la mise en référence du châssis sur des machines dédiées par exemple aux relevés dimensionnels ou aux opérations d'usinage, telle une opération de fraisage de la maquette.

Le second moyen de support 40 est formé par un jeu de barres 41 supporté par le châssis 11 et qui sont adaptables les unes avec les autres pour former un ensemble modulable de dimensions proches de la maquette. Cet ensemble modulable de barres 41 est destiné à recevoir les éléments A et B de cette maquette.

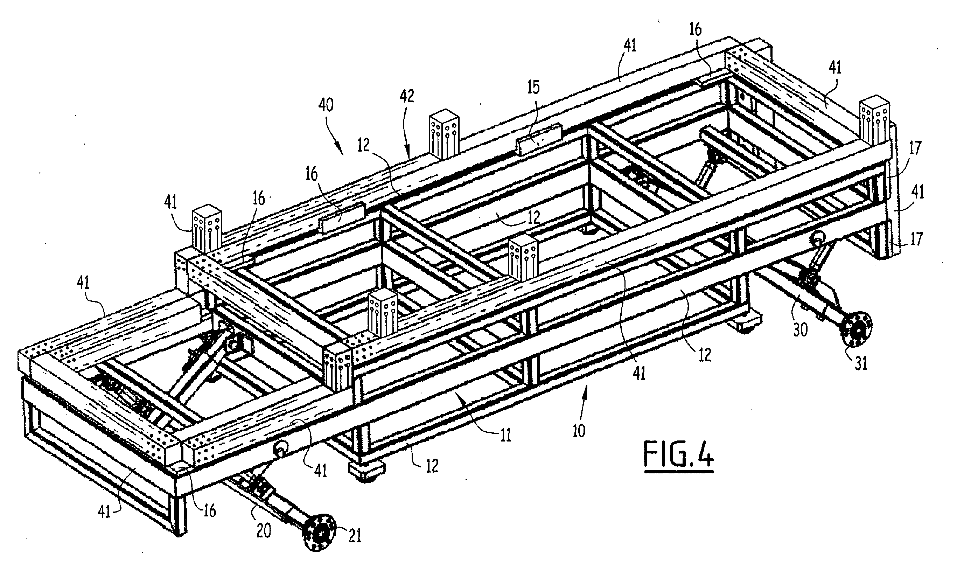

Cet ensemble modulable constitué de barres 41 horizontales et verticales comporte un cadre de base désigné dans son ensemble par la référence 42 et représenté plus particulièrement à la Fig. 4. Le cadre de base 42 présente une forme générale sensiblement identique au châssis 11 (Fig. 4) et il est relié à ce châssis 11 par une liaison de type coulissante.

Ainsi que montré sur les Figs. 3 et 4, la liaison de type coulissante entre le châssis 11 et le cadre de base 42 de l'ensemble modulable de barres 41 comprend au moins un profilé 15 en forme de U et de préférence deux profilés 15 placés l'un à la suite de l'autre sur une poutre longitudinale 12 supérieure du châssis 11 et qui sont destinés à recevoir libre à coulissement une barre 41 longitudinale du cadre de base 42 de l'ensemble modulable de barres. Ces profilés 15 forment un repère de positionnement selon un axe transversal et selon un axe vertical pour l'ensemble modulable de barres 41.

Par ailleurs, le châssis 11 comporte des patins horizontaux 16 montés sur les poutres 12 horizontales supérieures de ce châssis 11 et qui constituent des repères de positionnement selon un axe vertical pour l'ensemble modulable de barres 41. Ce châssis 11 comporte aussi des patins verticaux 17 montés sur des poutres 12 verticales de ce châssis 11 et qui constituent des repères de positionnement selon un axe longitudinal pour l'ensemble modulable de barres 41. Ainsi, les profilés 15 et les patins horizontaux 16 et verticaux 17 forment un ensemble de points d'appui pour le cadre de base 42 de l'ensemble modulable de barres 41 permettant ainsi au châssis 11 et à l'ensemble modulable de barres 41 de pouvoir se dilater librement l'un par rapport à l'autre compte tenu des différences de matériaux les composant.

Le cadre de base 2 sert de support à des barres 41 de différentes dimensions et placées horizontalement et/ou verticalement et assemblées les unes aux autres par des moyens d'indexage afin de former ledit ensemble modulable dont les dimensions sont proches de la maquette à visualiser et sont adaptables à chaque type de maquette.

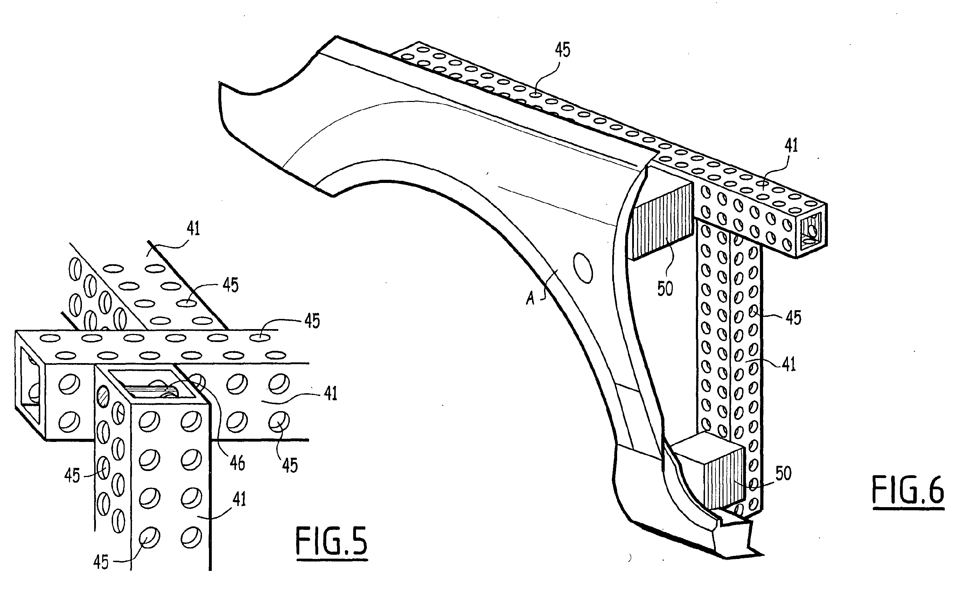

Comme montré notamment à la Fig. 5, les barres 41 sont creuses et présentent une section transversale carrée.

Les moyens d'indexage des barres 41 les unes par rapport aux autres sont formés par au moins une rangée d'orifices 45 et de préférence par deux rangées d'orifices 45 s'étendant parallèlement l'une par rapport à l'autre sur chaque face et sur toute la longueur des barres 41. Ces barres 41 sont fixées les unes aux autres par des pions de positionnement 46 disposés dans les orifices 45 des barres adjacentes, ainsi que montré à la Fig. 5.

Pour positionner les éléments de la maquette, comme par exemple l'aile A, sur l'ensemble modulable de barres 41, l'aile A comporte des patins d'appui 50 munis chacun d'un pion de centrage 51 destiné à coopérer avec un orifice 45 d'une barre 41, comme montré à la Fig. 6.

Ces patins d'appui 50 forment des repères de positionnement de l'aile A selon un axe longitudinal, un axe transversal et un axe vertical.

D'une manière générale, chaque élément de la maquette destiné à être placé sur l'élément modulable de la barre 41 comporte des patins 50 munis chacun d'un pion de centrage 51.

Par exemple chaque élément de la maquette est réalisé, soit par un usinage d'un bloc de résine, soit par un moulage selon la méthode de coulée d'une résine dans un moule en polystyrène préalablement usiné, soit par l'association de carbone et d'une résine, le carbone servant d'armature sur laquelle est déposée une fine couche de résine ultérieurement usinée.

Compte tenu du nombre important d'orifices 45 sur les barres 41, chaque élément de la maquette peut être placé avec précision sur l'ensemble modulable de barres 41 de façon à se rapprocher au maximum de la réalité et ainsi de pouvoir juger les jeux et les affleurements entre les éléments disposés sur cet ensemble.

Les orifices 45 sont usinés avec une grande précision, de l'ordre du centième de millimètre et les barres 41 sont de préférence en aluminium afin de garantir un certain degré de légèreté et de rigidité.

La structure de présentation selon l'invention présente l'avantage de disposer d'un châssis réglable et qui est facilement déplaçable pour servir de base roulante à la maquette de sorte qu'une mise en référence de cette maquette sur une machine outil puisse être réalisée et également de disposer d'un ensemble de support des éléments de cette maquette qui est modulable et adaptable en fonction des dimensions et de la forme du véhicule automobile en cours de conception. De plus, l'ensemble modulable de barres est facilement transformable par des moyens simples et offre une grande possibilité de positionnement des éléments de la maquette.

## Revendications

1. Structure de présentation d'au moins un élément d'une maquette représentant les formes extérieures d'un véhicule automobile, **caractérisée en ce qu'**elle comprend :
- un premier moyen de support (10) formé par un châssis (11) comportant des poutres (12) longitudinales et transversales assemblées entre elles et munies de moyens (20, 30) de roulage, et
- un second moyen de support (40) formé par un jeu de barres (41) supportées par ledit châssis (11) et adaptables par des moyens (45, 46) d'indexage les unes avec les autres pour former un ensemble modulable de barres (41) horizontales et verticales et de dimensions proches de la maquette, ledit ensemble étant destiné à supporter au moins ledit élément de cette maquette.

2. Structure selon la revendication 1, **caractérisée en ce que** les moyens de roulage comprennent un essieu avant (20) et un essieu arrière (30) munis chacun à chaque extrémité d'un moyeu (21, 31) porte roue (22, 32), l'empattement entre les essieux (20, 30), la distance entre les deux roues (22, 32) d'un même essieu (20, 30), les angles de carrossage de chaque roue (22, 32) et la hauteur du châssis (11) étant réglables.

3. Structure selon la revendication 1, **caractérisée en ce que** l'ensemble modulable de barres (41) comporte un cadre de base (42) formé de barres (41) longitudinales, transversales et verticales et en appui sur ce châssis (11), cet ensemble étant relié au châssis (11) par une liaison (15) de type coulissante formant un repère de positionnement selon un axe transversal et un axe vertical pour ledit ensemble modulable de barres (41).

4. Structure selon la revendication 3, **caractérisée en ce que** la liaison de type coulissante comprend au moins un profilé (15) en forme de U porté par une poutre longitudinale (12) du châssis (11) et destiné à recevoir libre à coulissement une barre longitudinale (41) du cadre de base (42) de l'ensemble modulable de barres (41).

5. Structure selon l'une quelconque des revendications 1 à 4, **caractérisée en ce que** le châssis (11) comporte des patins (16) horizontaux formant des repères de positionnement selon un axe vertical et des patins (17) verticaux formant des repères de positionnement selon un axe longitudinal pour l'ensemble modulable de barres (41).

6. Structure selon l'une quelconque des revendications 1 à 5, **caractérisée en ce que** les barres (41) sont creuses et ont une section transversale carrée.

7. Structure selon l'une quelconque des revendications 1 à 6, **caractérisée en ce que** les moyens d'indexage des barres (41) sont formés par au moins une rangée d'orifices (45) ménagés sur chaque face desdites barres (41) et destinés à coopérer avec des pions (46) de positionnement disposés dans les orifices (45) pour relier deux barres entre elles.

8. Structure selon l'une quelconque des revendications 1 à 7, **caractérisée en ce que** chaque élément (A, B) de la maquette comporte des patins (50) munis chacun d'un pion (51) de centrage destiné à coopérer avec un orifice (45) d'une barre (41), lesdits patins (50) formant des repères de positionnement dudit élément (A, B) selon un axe longitudinal, un axe transversal et un axe vertical.
